Europäisches Patentamt

European Patent Office

Office européen des brevets

(11) Publication number: **0 180 207**
**B1**

# EUROPEAN PATENT SPECIFICATION

(45) Date of publication of patent specification: **12.12.90**

(51) Int. Cl.⁵: **A 22 C 13/00**

(21) Application number: **85113772.9**

(22) Date of filing: **29.10.85**

(54) Cellulosic food casings.

(30) Priority: **30.10.84 US 666457**

(43) Date of publication of application:
**07.05.86 Bulletin 86/19**

(45) Publication of the grant of the patent:
**12.12.90 Bulletin 90/50**

(84) Designated Contracting States:
**AT BE CH DE FR GB IT LI LU NL SE**

(56) References cited:
**EP-A-0 109 611**
**DE-A-2 853 269**
**US-A-3 898 348**

(73) Proprietor: **VISKASE CORPORATION**
**6855 West 65th Street**
**Chicago, Illinois 60638 (US)**

(72) Inventor: **Schutt, Greta Rosa**
**4723 North Kewanee**
**Chicago Illinois 60630 (US)**
Inventor: **Stall, Alan David**
**2023 Bristol Court**
**Naperville Illinois 60565 (US)**

(74) Representative: **Eggert, Hans-Gunther, Dr.**
**Räderscheidtstrasse 1**
**D-5000 Köln 41 (DE)**

Courier Press, Leamington Spa, England.

## EP 0 180 207 B1

**Description**

The present invention relates generally to peelable food casings and, more particularly, to such casings in the form of highly coherent, readily deshirrable shirred sticks together with a method of manufacture thereof.

Food casings used in the processed food industry are generally thin-walled tubing of various diameters prepared from regenerated cellulose, cellulose derivatives, alginates, collagen and the like. Fibrous webs may also be embedded in these food casings and such casings are commonly termed in the art "fibrous food casings". In general, both fibrous and non-fibrous casings have multifunctional uses in that they may be employed as containers during the processing of the food product encased therein and also serve as a protective wrapping for the finished product. In the sausage meat industry, however, the preparation of various types of sausages ranging in size from smaller sausages, such as frankfurters, up to the larger sizes, such as bolognas, usually involves removing the casing from the processed meat prior to final packaging. Peeling the casing from the processed sausage has presented major problems, particularly in the production of frankfurters where large numbers of the product are involved and the desire in commercial operations is to use high-speed, automatic stuffing and peeling machines.

When the casing is removed from the meat mass, there is occasionally a tendency for some meat to adhere to the casing and be torn from the sausage with the casing, thereby causing surface marring of the sausage. In other instances, variations in the meat emulsion formulations or in the processing conditions can result in a degree of adherence of the casing to the product which hinders rapid removal of the casing from the product encased therein. The use of high speed, automatic peeling machines in commercial operations as, for example, disclosed in U.S. Patent No. 2,424,346 to Wilcoxon; 2,514,660 to McClure et al.; 2,686,927 to Greg; and 2,757,409 to Parkers et al., makes it particularly essential that there be minimal resistance to the separation of casing from sausage, or the product will jam at the peeler or go through unpeeled. Less than complete removal of the casing necessitates the expense of hand sorting and peeling.

Heretofore many attempts have been made to provide casings having easy release characteristics. It is known in the art, as disclosed, for example, in U.S. Patent No. 2,901,358 to Underwood et al.; 3,106,471 and 3,158,492 to Firth; 3,307,956 to Chiu et al.; 3,442,663 to Turbak; 3,558,331 to Tarika; and 3,898,348 to Chiu et al., that the application of certain types of coatings to the inside wall of food casings may afford improvement in the release characteristics of the casing from the encased sausage product.

Food casings having good release characteristics sometimes present other problems, unrelated to the release property, prior to, or at the time of, the automatic food stuffing operation. Casings which are generally utilized to encase food product such as vienna sausage, frankfurters and the like, are typically fabricated in continuous lengths, measuring from about 16.7 m to 48.7 m (55 feet to 160 feet) or longer in length, and from about 2.2 cm to 6.35 cm (7/8 inches to 2—1/2 inches) or more in flat width, which are formed into shirred casing sticks. The casing is stored, prior to use, in the form of these shirred or pleated casing sticks measuring 0.30 m to 0.61 m (1 to 2 feet) in length.

Two properties of the shirred casing sticks are particularly important, namely the "coherency" of the stick, which relates to the stick's capacity to maintain its integrity as a shirred stick and not to "break" into multiple shirred pieces, and the "ease of deshirring" of the stick, which relates to the ability to depleat the shirred stick just prior to stuffing without applying excessive force that would cause the casing to tear. It has been found that some release coatings as, for example, disclosed in U.S. Patent No. 3,451,827 to Bridgeford, when applied to the inside surface of the food casing, interfere with mechanical shirring of the casing or the mechanical stuffing of shirred casing. Other release coatings, such as those disclosed in U.S. Patent 3,898,348 to Chiu et al, while providing excellent release properties, at times leave something to be desired in terms of shirred stick coherency. Other considerations in providing food casings having easy release characteristics include providing a coating composition which is stable and suitable for the preparation of shirred casing sticks.

Typical methods and apparatus employed in the shirring of lengths of tubular casing to obtain shirred casing sticks are disclosed, for example, in U.S. Patent 2,984,574 to Matecki and U.S. Patent 3,110,058 to Marbach. It is also known to apply an aqueous coating composition to the internal surface of the casing through a hollow mandrel over which the casing is advancing as, for example, as described in U.S. Patent 3,451,827 to Bridgeford. In order to prevent damage to the casing while it is being shirred, it has been the practice to provide a lubricant to the shirring mandrel such as mineral oil employed with the coating composition.

Accordingly, it has been found desirable to employ a stable coating composition which provides release properties, lubricating properties, and which also enables depleating of shirred casing sticks without undue breakage during stuffing. Because of the need for providing the foregoing desirable characteristics, as well as the need of providing a coating composition which is stable and which will not separate, it has previously been found necessary to employ an emulsifier such as the polyoxyethylene sorbitan ester of higher fatty acids as taught by Chiu et al in U.S. Patent 3,898,348. Therefore, there is a continuing need to provide new and improved coating compositions for shirred food casings having the aforementioned desirable properties.

2

Summary of the invention

In one aspect, the present invention relates to a coating composition useful for treating the internal surface of cellulosic food casings comprising a mixture of a first component comprising an anionic water-soluble cellulose ether, a second component comprising a nonionic water-soluble cellulose ether, and a third component comprising a lubricant.

In another aspect, the present invention relates to shirred tubular cellulosic food casings coated with the aforementioned coating composition.

In a further aspect, this invention relates to a method for preparing a cellulosic food casing which comprises applying to the internal surface of said food casing a coating composition comprising at least the aforementioned three components.

In still a further aspect, this invention relates to a method of preparing an encased foodstuff which includes the step of stuffing the aforementioned coated casings with food product.

In yet a further aspect, this invention relates to a coating composition containing the aforementioned three components, said coating composition being useful to provide tubular cellulosic food casings which are easily peeled from the food product encased and processed therein.

Detailed description of the invention

In accordance with this invention, there are provided cellulosic food casings having a coating over the internal surface thereof, said coating comprising an admixture of an anionic water-soluble cellulose ether, a nonionic water-soluble cellulose ether, and a lubricant, preferably selected from the group consisting of animal oil, vegetable oil, mineral oil, and silicone oil, acetylated monoglycerides, polyoxyethylene monoesters, sorbitan trioleate, and mixtures thereof. Such cellulosic food casings are easily peeled from foodstuffs encased and processed therein. When shirred, the food casings are highly coherent and are readily deshirrable during a food stuffing operation.

The anionic water-soluble cellulose ether may be selected from the group consisting of carboxymethylcellulose and carboxymethyl hydroxyethylcellulose, and is present in said coating in an amount of from between 0.00155 $mg/cm^2$ (0.01 $mg/in^2$) and 0.0062 $mg/cm^2$ (0.04 $mg/in^2$) of casing surface preferably in an amount of from between 0.0043 $mg/cm^2$ (0.028 $mg/in^2$) and 0.0054 $mg/cm^2$ (0.035 $mg/in^2$) of casing surface.

Commercially, carboxymethylcellulose and carboxymethyl hydroxyethylcellulose are almost always sold as the sodium salt, and it is well established trade practice not to refer to the commercial product as the sodium salt. For the purpose of this application, reference to these materials shall mean the sodium salt and other alkali metal salts thereof. Also suitable are the alkali soluble ethers, as, for example alkali soluble methyl cellulose and hydroxyethylcellulose, and for the purpose of this application the definition of water soluble is intended to include such alkali soluble cellulose ethers.

In accordance with this invention, the coating composition may be provided from a solution containing at least about 0.3 percent by weight of the anionic water-soluble cellulose ether, at least about 0.2 percent by weight of the nonionic water-soluble cellulose ether, at least about 1 percent by weight of the lubricant, and the balance being water, all weight percentages being based on the weight of the coating composition.

The nonionic water-soluble cellulose ether may be selected from the group consisting of methyl cellulose, hydroxypropyl methylcellulose, hydroxybutyl methylcellulose, hydroxypropylcellulose, ethyl methyl cellulose, hydroxyethylcellulose, and ethyl hydroxyethylcellulose. The nonionic water-soluble cellulose ether is present in the said coating in an amount of from between about 0.00108 $mg/cm^2$ (0.007 $mg/in^2$) and 0.02325 $mg/cm^2$ (0.15 $mg/in^2$) of casing surface, and preferably, in an amount of from between 0.00232 $mg/cm^2$ (0.015 $mg/in^2$) and 0.0054 $mg/cm^2$ of casing surface.

The third component of the coating composition is present in said coating in an amount of from between 0.0054 $mg/cm^2$ (0.035 $mg/in^2$) and 0.04341 $mg/cm^2$ (0.28 $mg/in^2$) of casing surface, and preferably, in an amount of from between 0.0108 $mg/cm^2$ (0.07 $mg/in^2$) and 0.0325 $mg/cm^2$ (0.21 $mg/in^2$) of casing surface. The third component is preferably mineral oil.

Particularly suitable coating compositions also contain between about 10 percent and 90 percent by weight, based on the weight of the coating composition, of a polyol having from 3 to 6 carbon atoms and at least 2 hydroxyl groups. Typical polyols that can be employed are glycerol, propylene glycol, triethylene glycol, and sorbitol. The amount of polyol that may be used is, in general, dependent on the desired viscosity of the coating composition and also on the amount of water that may be tolerated by the tubular casings being treated.

Casings produced in accordance with the method of the present invention can be utilized in the preparation of encased foodstuffs from a wide range of food formulations and processing conditions, and then can be readily removed from the processed foodstuff using high-speed, automatic peeling machines without scarring or scuffing the foodstuff surface, and with high peeling efficiency.

The food casings of the present invention may be prepared from tubular casings such as fibrous reinforced regenerated cellulose, and particularly casings of non-fibrous regenerated cellulose, that are fabricated in accordance with any of the known commercial methods, by applying the coating composition of this invention to the internal surface of such casings.

Lengths of food casings are generally shirred or pleated into shirred casing sticks for ease of storage, handling, and subsequent use on automatic food stuffing machines. During use, the shirred casing sticks must be readily extended or deshirred without tearing or other damage when stuffed with a food emulsion, yet the shirred stick must exhibit sufficient cohesive strength or "coherency" to be self-sustaining and permit handling thereof without breaking, and to insure trouble-free operation with manual and automatic food stuffing apparatus.

It has been found, however, that when certain water-soluble ethers are employed for imparting release characteristics to food casings prepared in the form of shirred casing sticks, the pleats of the shirred casing, which are nested together and interlocked, tend to excessively adhere to each other (so-called "blocking of pleats") and the casing subsequently will be damaged during stuffing with meat emulsion.

It has also been found that when certain water-insoluble alkylene oxide adducts of fatty acids or fatty acid partial esters are employed to impart release characteristics to food casings, the solution stability of the coating composition is much less than desirable. That is, it is highly desirable for production purposes that the coating composition provide a stable solution for at least seventy-two hours, such as over a weekend period, in order to avoid the need to make a fresh coating solution daily, or having to discard the coating solution because it has separated. The coating composition of the instant invention overcomes these noted disadvantages of the coating compositions of the prior art, and it provides improved characteristics to the shirred food casings of this invention.

Generally speaking, the coating composition of this invention may be applied to the internal casing surface by using any one of well-known methods. Thus, for example, a coating composition containing the water-soluble cellulose ethers can be introduced into the casing in the form of a "slug" of liquid, and advancing the casing past the liquid slug coats the inner surface thereof. Alternatively, a preferred method is application of an aqueous coating composition to the internal surface of the casing through a hollow mandrel over which the casing is advancing as, for example, the mandrel of a casing shirring machine in a manner similar to that described in U.S. Patent No. 3,451,827 to Bridgeford. However, in the best mode, the coating composition of this invention is applied to the internal casing surface by employing a three-passage shirring mandrel. Such a mandrel has three separate ducts; one duct for supplying inflating and propellant air, one duct for supplying the coating composition, and one duct to relieve pressure for the excess air-coating composition mixture, for example, as disclosed in Steinbis U.S. Patent 4,374,871.

It has been found that aqueous solutions of the coating compositions of this invention are most suitable and preferred for preparation of the coated tubular fibrous and non-fibrous casings of the present invention. These aqueous solutions afford a more uniform coating of the coating composition and better control of the amount of the desired coating applied to the surface of the casing. However, application of a coating composition in suspension form may be satisfactory for preparing casings used for certain applications.

Other factors are known to affect the preparation of shirred casing sticks and the suitability of the shirred casing sticks for use in the processing of various types of food products, particularly when high speed automatic equipment is employed in the shirring and stuffing operations. It is well known in the art, for example, that if the moisture content of the tubular casing is greater than about 40 percent by weight, based upon the weight of dry cellulose, difficulty is experienced during shirring such as shirred stick coherency being diminished, thereby making stuffing operations more difficult. Further, it has been found that when water is applied to the casing during the shirring process, application of excess amounts of water will cause the casing to seize on the shirring mandrel, thus making further processing thereby very difficult, if not impossible.

Reference to the terms "moisture content" or "water content" throughout the specification and claims with respect to the cellulosic casings of the instant invention, unless otherwise specified, is intended to refer to and should be understood as referring to the weight percent of moisture or water in the casing based on the weight of dry cellulose in the casing. Accordingly, the term "dry cellulose" excludes the weight of all other casing components, such as moisture, water, colorants, coating materials such as moisture barrier and peelability coatings, plasticizers, and other materials left on the casing after the casing has been heated to drive off all of the water and other volatile materials initially present in the casing.

Further, when it is desired to apply the coating compositions described herein, as, for example, while the tubular casing is passing over a shirring mandrel prior to or during the shirring operation, it has been found that the amount of coating composition applied while treating the internal surface of the casing must be controlled to limit the amount of water added to the casing. In accordance with the present invention, the coated casing should have a water content, based upon the weight of dry cellulose, of between about 12.0 weight percent and about 40.0 weight percent, preferably between about 22.5 weight percent and about 34.5 weight percent, and more preferably between about 25.5 weight percent and about 33.0 weight percent, in order to avoid the above mentioned problems while optimizing stick coherency.

It is more particularly advantageous to avoid application of more coating composition than can be imbibed by the casing in order to prevent excess coating composition from being lost and wasted, or from accumulating in localized areas of the shirred sticks with resulting detrimental effects thereto.

Another factor known to be especially important as it affects the suitablility of shirred casing sticks for use with automatic food stuffing equipment, as, for example employed in the preparation of products such as frankfurters, is the durability or coherency of the shirred stick as a self-sustaining article. A disjoinder or break in the shirred stick prior to mounting on the stuffing apparatus makes the stick unsuitable for use. Accordingly, any treatment, such as the application of a coating to a tubular food casing that is to be formed into shirred casing sticks, must not detrimentally affect the coherency of the shirred stick, and the coating material and method of application thereof, must be considered in light of its effect on coherency.

Following is a description of the coherency test that is used for determining this important characteristic of shirred casing sticks.

Coherency test method

Coherency of a casing stick is determined by measuring the bending moment in inch-pounds at the breaking of a stick. A casing stick is cradled on two V-notched support brackets secured on a base plate and spaced apart a distance (D), about 80% to 90% of the length of the casing stick being tested. A pressure member having V-notched struts spaced apart a distance of D less 10.16 cm (4 inches) is centrally lowered onto the top of the casing stick. A downward pressure is provided by a motor operated rack and pinion linkage to a force gauge (such as a Hunter Force Indicator, Model L-IM with a "Hold at Maximum Device") that is secured centrally to the pressure member. The force is increasingly applied until the casing stick breaks. The force reading P in kg (pounds) is noted. The bending moment in cm-kg (inch-pounds) at break on the apparatus is equal to $P/2 \times 5.08$ cm (2 inches), and thus the force reading P equates to cm.kg (inch-pounds) of bending moment required to break the casing stick. In general, a coherency of at least about 1.152 cm.kg (1.0 inch-pound) is required for the casing stick to be considered to have an acceptable coherence, and a coherency of at least about 2.88 cm.kg (2.5 inch-pounds) or higher is especially suitable and preferred.

Another factor that is important in affecting the suitability of shirred casing sticks for use with automatic food stuffing equipment is the deshirring force required to deshirr the casing. If the required deshirring force is excessive, tearing of casing will result during deshirring. A deshirring force test, as described below, was employed in evaluating the coated casings of the present invention.

Deshirring force test

This test was used to determine the force required to deshirr a selected stick of casing in the direction in which it would be stuffed. The apparatus used consists of a force gauge (Model L-1, Ametek Testing Equipment Systems, measuring 0—0.4536 kg (0—1 pounds) marked off in 4.536 g (0.01 lb.) increments) and a pulley with an attached reeling device which is used to pull and deshirr the casing for the shirred stick. Using this equipment, a casing stick is pulled and deshirred at a constant speed of 114.3 cm (45 inches) per minute.

The test procedure for the deshirring force test consists of the following steps:

(a) From the selected shirred stick, samples of an approximately 5.08 cm (2-inch) shirred length are removed from the open end, the middle, and the closed end of the stick.

(b) The end of each stick sample is deshirred by hand approximately 2.54 cm (1 inch). Tape is wrapped around the cone portion of the stick to ensure that the casing will not deshirr at that cone position.

(c) The deshirred portion of the stick is clamped to the force gauge using a spring clamp and a string is attached to the gauge. The other end of the stick is clamped to the reeling device attached to the pulley.

(d) The reeling device and pulley mechanism is started and the casing deshirring begins. Readings are taken to measure the deshirring force on the force gauge. The most frequently noted instantaneous value of the deshirring force which occurs, as a portion of the stick is deshirred, is defined as the modal deshirr force reading. In general, a modal deshirr force of less than 0.295 kg (0.65 pound) is preferred and a force less than 0.249 kg (0.55 pound) is more preferred.

The invention will become clearer when considered together with the following examples which are set forth as being merely illustrative of the invention and which are not intended, in any manner, to be limitative thereof. Unless otherwise indicated, all parts and percentages are by weight.

Example 1

Several coating formulations within the scope of the present invention were prepared, along with comparative formulations identified in Table I as formulas 7 and 8, using "Span 85" and "Mazol 80 MG", respectively, as coating additives according to the procedure described below. "Span 85" is sorbitan trioleate having an HLB of 1.8 available from ICI-Americas, Inc., Wilmington, Delaware. "Mazol 80 MG" is a mixture of ethoxylated monoglycerides having an HLB of 11.0 available from Mazer Chemicals, Inc.

In the coating formulations, CMC 7LF is carboxymethylcellulose, and Methocel E-5 is methyl cellulose, both products being available from The Dow Chemical Company, Midland, Michigan.

The following procedure was followed in preparing the formulations identified in Table I. About one-fourth of the formulation amount of water was heated to between 80°C and 90°C. The methyl cellulose was then added to the heated water with agitation until all particles were thoroughly wetted and a smooth paste was obtained. About another one-fourth of the formulation amount of water at 20°C was added to the mixture and the entire solution was cooled to 20°C while being agitated for about twenty minutes to ensure that the methyl cellulose had completely dissolved and a smooth, clear solution was obtained. The carboxymethylcellulose was then mixed with the remaining portion of water for about five minutes with a dispersator. With a dispersator, there was then mixed in the following order, the coating additive (when employed), mineral oil, propylene glycol, the carboxymethylcellulose solution, and the methyl cellulose solution. The resulting mixture was mixed with the dispersator for about ten minutes. The mixture was then homogenized using a Gaulin homogenizer at about 242.15 bar (3500 psi) for about fifteen minutes and rehomogenized to ensure complete homogenization.

Commercially produced non-fibrous cellulosic casing samples having a flat width measuring about 3.048 cm (1.2 inches) were internally coated with the prepared coating formulations. These casings were shirred by using an apparatus such as that disclosed in U.S. Patent 2,984,574 to Matecki and U.S. Patent 3,110,058 to Marbach comprising a three-passage mandrel. As each length of casing was shirred, the particular coating formulation from Table I was applied in the amount of about 3.5 mg. of coating composition per square inch of casing internal surface. Coherency values of the coated shirred casing sticks were determined by using the "Coherency Test Method", and the deshirr forces of said coated casings were determined by using the "Deshirring Force Test", both methods described earlier herein. The solution compositions and the stability property thereof, as well as the properties of the shirred casings treated with these solution compositions, are given below in Table I.

The shirred casings were also stuffed with the following frankfurter type medium collagen meat emulsion composition, and linked into frankfurters by conventional linking apparatus for casing peelability evaluations.

### Meat emulsion composition

| Ingredients | (Pounds) | kg |
|---|---|---|
| Beef chuck | (44) | 19.96 |
| Beef shank | (32) | 14.51 |
| Beef cheek | (32) | 14.51 |
| Regular pork trim | (92) | 41.73 |
| Salt | (4.5) | 2.041 |
| Prague powder | (0.5) | 0.227 |
| Spice | (2) | 0.907 |
| Water | (44) | 19.96 |

The stuffed casings were all processed in a smokehouse using a processing cycle known to adversely affect the peelability of casing from encased food product. The processing cycle used consists of a three-minute smoke period followed by a 30-minute period during which time the temperature of the smokehouse was increased from 60°C to 82.2°C (140°F to 180°F) while maintaining the relative humidity at about 25%. The temperature of the smokehouse was maintained at a temperature of about 82.2°C (180°F) until the internal temperature of encased food product reached about 71.1°C (160°F), after which time the frankfurters were showered with cold water for about 10 minutes, and then brine chilled for about 10 minutes until their internal temperature was about 5°C (41°F).

Peelability characteristics of the various casings of this Example were evaluated on a peeling machine known commercially as an "Apollo Ranger Peeler" which was adjusted to peel at the rate of 907.2 kg (2000 pounds) of frankfurters per hour. Results of the peeling tests are set forth in Table I below, wherein peelability is reported as weight percent of the food product peeled (i.e., 0% denotes that none of the casing had been peeled from about the food product encased therein, and 100% represents total peeling and release of the casing from the food product).

TABLE I
Solution compositions, stability, peelability, coherency, and
deshirr force evaluations

| Solution No. and casing sample No. | 1 | 2 | 3 | 4 | 5 | 6 | 7 | 8 |
|---|---|---|---|---|---|---|---|---|
| | % | % | % | % | % | % | % | % |
| Deionized water | 66.28 | 65.99 | 64.99 | 66.23 | 66.44 | 65.44 | 66.28 | 66.5 |
| Propylene glycol | 28.40 | 28.11 | 27.11 | 28.35 | 28.56 | 27.56 | 28.40 | 28.5 |
| Mineral oil | 4.00 | 4.00 | 4.00 | 4.00 | 4.00 | 4.00 | 4.00 | 4.0 |
| CMC 7 LF | 0.9 | 0.9 | 0.9 | 0.42 | —— | —— | 0.9 | —— |
| Methocel E-5 | 0.42 | 1.0 | 3.0 | 1.0 | 1.0 | 3.0 | —— | —— |
| Mazol 80 MG | —— | —— | —— | —— | —— | —— | 0.42 | —— |
| Span 85 | —— | —— | —— | —— | —— | —— | —— | 1.0 |
| Solution stability | Stable for more than 72 hrs | Stable for more than 72 hrs | Stable for more than 72 hrs | Stable for more than 72 hrs | Stable for more than 72 hrs | Stable for more than 72 hrs | Stable for 72 hrs only | Stable for more than 72 hrs |
| **Peelability (%) of treated casings** | | | | | | | | |
| **Stick** | | | | | | | | |
| A | 100 | 100 | 100 | 89.0 | 21.9 | 86.4 | 94.4 | 37.9 |
| B | 95.8 | 100 | 100 | 96.3 | 46.4 | 100 | 100 | 6.3 |
| C | 100 | 92.4 | 97.2 | 100 | 49.5 | 95.7 | 100 | 9.2 |
| X (Average) | 98.6 | 97.5 | 99.1 | 95.1 | 39.3 | 94.0 | 98.1 | 17.8 |
| **Coherency (inch-lbs.) of shirred sticks (1 inch-lb.≃1.152 kg.cm)** | | | | | | | | |
| After 7 days | 2.92 | 3.02 | 2.57 | 2.96 | 3.11 | 2.84 | 2.01 | 3.18 |
| After 14 days | 2.98 | 2.90 | 2.58 | 2.98 | 2.67 | 2.81 | 2.26 | 3.17 |
| After 28 days | 3.01 | 2.97 | 2.56 | 3.00 | 2.95 | 2.82 | 2.08 | 3.02 |
| **Deshirr force (lbs.) of shirred sticks (modal*/maximum) (1 lb.≃0.4536 kg)** | | | | | | | | |
| After 7 days | .35/.53 | .31/.61 | .33/.58 | .29/.58 | .28/.44 | .37/.61 | .33/.59 | .29/.52 |
| After 14 days | .34/.49 | .31/.51 | .30/.57 | .30/.66 | .31/.53 | .36/.58 | .33/.54 | .25/.53 |
| After 28 days | .36/.62 | .35/.58 | .31/.52 | .29/.55 | .27/.55 | .34/.62 | .30/.55 | .25/.51 |

*Modal deshirr force (most frequent reading)

The data in Table I show that the coating compositions of this invention (solution nos. 1 to 4) are as good as, or better than, coating compositions containing emulsion stabilizers such as "Mazol 80 MG" and "Span 85" (solution nos. 7 and 8) in terms of solution stability. This was unexpected because coating composition nos. 1 to 4 do not contain an emulsifier such as either the polyoxyethylene sorbitan ester of higher fatty acids ("Tween 80") described in Chiu et al U.S. Patent 3,898,348 or the "Mazol 80 MG" surfactant described in Higgins et al U.S. serial no. 573,367 filed on January 26, 1984.

It was also found that the shirred casings of this invention (casing sample nos. 1 to 4) had improved coherency values over the casing treated with "Mazol 80 MG" (casing sample no. 7). The modal (most frequent reading) deshirr forces for casing sample nos. 1 to 4 ranging from 0.131 kg to 0.163 kg (0.29 to 0.36 pound) (28 days after shirring) were well within the preferred range of less than 0.249 kg (0.55 pound).

It was further found that the peelability properties of the casings of this invention are comparable to, or better than, those casings treated with "Mazol 80 MG" as shown by comparing the results for casing sample nos. 1 to 4 with casing sample no. 7.

Likewise, it was found that the deshirr forces of the casings of this invention are comparable to those of comparative formulations 7 and 8.

Example 2

Following the procedure of Example 1, additional coating formulations within the scope of the present invention were prepared having the compositions shown in Table II below.

Commercially prepared non-fibrous cellulose casings were treated with these solution compositions and shirred as described in Example 1. The casings were evaluated for peelability properties as in Example 1. The coherency and deshirr force values were determined by using the "Coherency Test Method" and the "Deshirr Force Test Method" used in Example 1. The shirred stick properties are given in Table II below.

TABLE II
Solution compositions, coherency, and deshirr
force evaluations

| Solution No. and casing sample No. | 1 | 2 | 3 | 4 | 5 | 6 |
|---|---|---|---|---|---|---|
| | % | % | % | % | % | % |
| Deionized water | 66.28 | 66.28 | 66.50 | 66.23 | 66.44 | 65.44 |
| Propylene glycol | 28.40 | 28.40 | 28.50 | 28.35 | 28.56 | 27.56 |
| Mineral oil | 4.00 | 4.00 | 4.00 | 4.00 | 4.00 | 4.00 |
| CMC 7 LF | 0.90 | 0.90 | —— | —— | —— | —— |
| Methocel E-5 | 0.42 | —— | —— | 1.00 | 1.0 | 3.0 |
| Mazol 80 MG | —— | 0.42 | —— | 0.42 | —— | —— |
| Span 85 | —— | —— | 1.00 | —— | —— | —— |

Coherency (inch-lbs.) of shirred sticks (1 inch.lb≈1.152 kg.cm)

| | 1 | 2 | 3 | 4 | 5 | 6 |
|---|---|---|---|---|---|---|
| After 1 day | 2.7 | 2.59 | 2.76 | 0.81 | 2.73 | 2.33 |
| After 14 days | 2.64 | 2.72 | 2.82 | 0.85 | 2.85 | 2.52 |
| After 28 days | 2.79 | 2.64 | 2.68 | 0.50 | —— | 2.53 |

Deshirr force (lbs.) of shirred sticks (modal*/maximum) (1 lb.≈0.4536 kg)

| | 1 | 2 | 3 | 4 | 5 | 6 |
|---|---|---|---|---|---|---|
| After 1 day | .453/.647 | .30/.53 | .28/.48 | .31/.48 | .29/.57 | .34/.52 |
| After 14 days | .42/.65 | .46/.55 | .36/.53 | .25/.55 | .31/.53 | .38/.69 |
| After 28 days | .438/.71 | .36/.57 | .27/.49 | .31/.40 | —— | .34/.57 |

*Modal deshirr force (most frequent reading)

The data in Table II show that substituting methyl cellulose (solution no. 1) for an equal amount of "Mazol 80 MG" surfactant (solution no. 2) improves the coherency of the shirred casing stick without increasing the deshirr force to an undesirable level. The data also show that combining methyl cellulose and "Mazol 80 MG" in the same easy peel coating composition (solution no. 4) would not be advisable, because this would substantially lower the coherency of the shirred stick as evidenced by casing sample no. 4. The data further show that shirred casings coated with a coating composition which does not contain carboxymethylcellulose and "Mazol 80 MG" but which contains methyl cellulose (casing sample nos. 5 and 6), have improved coherency values over those containing "Mazol 80 MG" (casing sample no. 2).

Example 3

In this example, several types of cellulose ether products having various solution viscosities were evaluated for their suitability in the practice of this invention. The cellulose ether products are available from The Dow Chemical Company, Midland, Michigan under the tradename Methocel®. The Methocel A brand products are methylcellulose made by reacting cellulose with methyl chloride in the presence of caustic soda. The Methocel E, K, 228, 240 and 856 brand products are hydroxypropyl methylcellulose made by reacting cellulose with propylene oxide and methyl chloride in the presence of caustic soda. The Methocel HB brand products are hydroxybutyl methylcellulose made by reacting cellulose with butylene oxide and methyl chloride in the presence of caustic soda. Further, Methocel 228 has a viscosity of 4,000 cps., Methocel 240 has a viscosity of 40,000 cps., Methocel 856 has a viscosity of 75,000 cps., Methocel HB has a viscosity of 12,000 cps., Methocel E-5 has a viscosity of 5 cps., Methocel K-35 has a viscosity of 35 cps., and Methocel A-400 has a viscosity of 400 cps. All Methocel solution viscosities are measured with Ubbelohde capillary tubes at a 2% concentration at 20°C.

Following the procedure of Example 1, coating formulations within the scope of the present invention were prepared having the compositions shown in Table III below. Commercially prepared non-fibrous cellulose casings were treated with these solution compositions and shirred as described in Example 1. The casings were evaluated for coherency and deshirr force values by using the "Coherency Test Method" and the "Deshirr Force Test Method" used in Example 1. The properties of the shirred stick samples are given in Table III below.

TABLE III
Cellulose ether solution compositions, coherency,
and deshirr force evaluations

| Solution No. and casing sample No. | 1 | 2 | 3 | 4 | 5 | 6 | 7 |
|---|---|---|---|---|---|---|---|
| | % | % | % | % | % | % | % |
| Deionized water | 66.28 | 66.28 | 66.28 | 66.39 | 66.44 | 66.44 | 66.28 |
| Propylene glycol | 28.40 | 28.40 | 28.40 | 28.51 | 28.56 | 28.56 | 28.40 |
| Mineral oil | 4.00 | 4.00 | 4.00 | 4.00 | 4.00 | 4.00 | 4.00 |
| CMC 7 LF | 0.90 | 0.90 | 0.90 | 0.90 | 0.90 | 0.90 | 0.90 |
| Methocel* | 0.42 | 0.42 | 0.42 | 0.20 | 0.10 | 0.10 | 0.42 |
| Solution viscosity (cps) | 54 | 45 | 95 | 52 | 40 | 47 | 43 |
| Coherency (inch-lbs.) of shirred sticks (1 inch-lb.≈1.152 kg.cm) | | | | | | | |
| After 10 minutes | 1.07 | 2.03 | 1.90 | 1.83 | 1.87 | 1.90 | 1.60 |
| After 7 days | 2.1 | 2.1 | 2.25 | 1.98 | 2.05 | 2.18 | 2.08 |
| After 14 days | 1.92 | 2.02 | 2.18 | 1.92 | 2.06 | 2.24 | 1.89 |
| After 28 days | 2.04 | 2.06 | 2.07 | 1.95 | 2.09 | 1.94 | 1.86 |
| Deshirr force (lbs.) of shirred sticks (modal**/maximum) (1 lb.≈0.4536 kg) | | | | | | | |
| After 10 minutes | .373 / .533 | .357 / .527 | .343 / .457 | .363 / .490 | .397 / .527 | .350 / .427 | .300 / .397 |
| After 7 days | .401 / .612 | .412 / .630 | .379 / .589 | .440 / .531 | .438 / .567 | .421 / .570 | .379 / .580 |
| After 14 days | .424 / .520 | .420 / .550 | .427 / .634 | .443 / .528 | .427 / .552 | .434 / .547 | .394 / .627 |
| After 28 days | .379 / .600 | .418 / .610 | .410 / .643 | .393 / .603 | .436 / .653 | .386 / .628 | .393 / .462 |

*Solution 1 was made with Methocel K-35.
Solution 2 was made with Methocel A-400.
Solution 3 was made with Methocel 228.
Solution 4 was made with Methocel HB.
Solution 5 was made with Methocel 240.
Solution 6 was made with Methocel 856.
Solution 7 was made with Methocel E-5.
**Modal deshirr force (most frequent reading)

After preparation, all solution compositions herein were stable for more than 72 hours. The data in Table III shows that all the cellulose ether products provided improved coated casing shirred stick properties over the prior art. In addition, all the cellulose ether product types evaluated provided comparable shirred stick coherencies and deshirr forces.

Example 4

This example compares the properties of non-fibrous shirred casing sticks treated with a coating composition containing a polyoxyethylene sorbitan ester of higher fatty acids ("Tween 80") as taught by Chiu et al. in U.S. Patent 3,898,348, or a mixture of ethoxylated monoglycerides ("Mazol 80 MG"), with those of shirred casing sticks treated with a coating composition containing carboxymethylcellulose and methyl cellulose, but not containing "Tween 80" or "Mazol 80 MG". The coating compositions and the properties of the treated casings are shown in Table IV below.

TABLE IV
Coating solution compositions

| Solution No. and casing No. | 1 | 2 | 3 |
|---|---|---|---|
| Deionized water | 65.86 | 66.28 | 66.28 |
| Propylene glycol | 27.99 | 28.40 | 28.40 |
| Mineral oil | 4.00 | 4.00 | 4.00 |
| CMC 7 LF | 0.90 | 0.90 | 0.90 |
| Methocel E-5 | —— | —— | 0.42 |
| Mazol 80 MG | —— | 0.42 | —— |
| Tween 80 | 1.25 | —— | —— |

Casing stick properties

| Coherency (inch-lbs.) (1 inch-lb.$\approx$1.152 kg.cm) | | | |
|---|---|---|---|
| 7 days | 2.89 | 4.4 | 5.1 |
| 14 days | 2.93 | 4.63 | 5.22 |
| 44 days | 3.04 | 5.13 | 5.26 |
| Deshirr force (lbs.) (1 lb.$\approx$0.4536 kg) | | | |
| 7 days | .28/.58 | .30/.61 | .38/.60 |
| 14 days | .31/.58 | .33/.62 | .39/.62 |
| 44 days | .36/.69 | .40/.69 | .46/.84 |

The data in Table IV show that the coherency of the shirred casing of this invention (casing no. 3) is clearly superior to that of the prior art casing treated with "Tween 80" (casing no. 1), and also superior to that of the casing treated with "Mazol 80 MG" (casing no. 2). The modal deshirr force of casing no. 3 which is 0.172 kg (0.38 pound), is still within the preferred range of less than 0.249 kg (0.55 pound). The casing nos. 1, 2 and 3 have acceptable peelability properties.

Pursuant to the foregoing, it has been found that coating compositions containing a water-soluble anionic cellulose ether, a water-soluble nonionic cellulose ether, and a lubricating component, such as mineral oil, are eminently useful for the preparation of shirred cellulosic food casings because they satisfy four important factors. That is, the coating compositions of this invention (1) remain stable for at least seventy-two hours, (2) have the ability to provide food casings with acceptable peeling properties, (3) provide shirred casing having good coherency, without increasing the deshirr forces to an undesirable level, and (4) allow adequate lubrication for casing shirrability and casing stick transfer on a shirring mandrel.

The stability of the coating compositions of this invention is surprising, even though methyl cellulose is expected to induce effective emulsification in two-phase systems, because carboxymethylcellulose is also expected to possess high emulsification and dispersive powers. However, coating compositions such as those of Chiu et al U.S. Patent 3,989,348 containing carboxymethylcellulose were found to separate very rapidly in the absence of an emulsifier such as "Tween 80", "Tween 40", or surfactant 365 (compositions A, D, G, L and O of Example XV, U.S. Patent 3,898,348). Similar coating compositions containing "Mazol 80 MG" as an emulsifier (such as coating composition F shown at Table V, page 25 of U.S. Serial No. 573,367 filed on January 26, 1984) are also less stable than those of the present invention. Composition F therein had a 95% phase separation after 72 hours as it did not contain the emulsifier "Mazol 80 MG" or any of the emulsifiers claimed in said patent application.

Although not intended to be bound by a theory for the surprising results found herein, it appears that there is synergism between the water-soluble anionic and nonionic cellulose ethers employed in this invention. For example, shirred casing sample 7 of Example 1 treated with the coating composition containing carboxymethylcellulose, but without methyl cellulose, had a low coherency value of only 2.396 kg.cm (2.08 inch-pounds) 28 days after shirring, while shirred casing sample 5 of Example 1 treated with the coating composition containing methyl cellulose, but without carboxymethylcellulose, had very poor peelability properties of only about 39%. Likewise, shirred casing sample 4 of Example 2 treated with the coating composition containing methyl cellulose and "Mazol 80 MG" had a very poor coherency of only about 0.576 kg.cm (0.50 inch-pounds) 28 days after shirring. However, shirred casing sample 2 of Example 1 treated with the coating composition containing both carboxymethylcellulose and methyl cellulose exhibited good peelability of about 97.5%, good coherency of about 3.421 kg.cm (2.97 inch-pounds) 28 days after shirring, and it had acceptable deshirr forces.

**Claims**

1. A coating composition useful for treating the internal surface of cellulosic food casings, said coating composition comprising a mixture of a first component comprising an anionic water-soluble cellulose ether, and a second component comprising a nonionic water-soluble cellulose ether and further comprising as a third component a lubricant.

2. The coating composition of claim 1 wherein said lubricant is selected from the group consisting of mineral oil, vegetable oil, animal oil, silicone oil, acetylated monoglycerides, polyoxyethylene monoesters, sorbitan trioleate, and mixtures thereof.

3. The coating composition of claim 1 or 2 wherein said anionic cellulose ether is selected from the group consisting of carboxymethylcellulose and carboxymethylhydroxyethylcellulose.

4. The coating composition of claim 1, 2 or 3 wherein said nonionic cellulose ether is selected from the group consisting of methyl cellulose, hydroxypropyl methylcellulose, hydroxybutyl methylcellulose, hydroxypropylcellulose, ethyl methylcellulose, hydroxyethylcellulose, and ethyl hydroxyethylcellulose.

5. The coating composition of one of the foregoing claims including a polyol having 3—6 carbon atoms and at least 2 hydroxyl groups.

6. The coating composition of claim 5 wherein said polyol is selected from the group consisting of propylene glycol, triethylene glycol, glycerol, and sorbitol.

7. The coating composition according to one of claims 1 to 6 wherein said food casings comprise cellulosic food casings.

8. The coating composition of claim 7 wherein said cellulosic food casings are non-fibrous food casings.

9. A coating composition according to one of claims 1 to 8 comprising a solution containing at least about 0.3 percent by weight of said anionic water-soluble cellulose ether, and at least about 0.2 percent by weight of said nonionic water-soluble cellulose ether, based on the weight of said coating composition.

10. A coating composition according to one of claims 1 to 9 including at least about 1 percent by weight of a lubricant, based on the weight of said coating composition.

11. A method for preparing a cellulosic food casing which is easily peelable from food products encased and processed therein which comprises applying to the internal surface of said cellulosic food casing a coating composition according to one of claims 1 to 10.

12. The method for preparing a cellulosic food casing of claim 11 wherein said first component is present in an amount of between about 0.01 mg/in² (0,00155 mg/cm²) and about 0.04 mg/in² (0,00620 mg/cm²) of said casing internal surface.

13. The method for preparing a cellulosic food casing of claim 11 or 12 wherein said second component is present in an amount of between about 0.007 mg/in² (0,00108 mg/cm²) and about 0.15 mg/in² (0,02325 mg/cm²) of said casing internal surface.

14. The method for preparing a cellulosic food casing of claim 11, 12 or 13 wherein said third component is present in an amount of between about 0.035 mg/in² (0,00542 mg/cm²) and about 0.28 mg/in² (0,04341 mg/cm²) of said casing internal surface.

15. A method for preparing a non-fibrous cellulose food casing according to one of claims 11 to 14 including adding to said casing between about 12.0 weight percent and about 40.0 weight percent of water, based upon the weight of dry cellulose in said casing.

16. A method for preparing a processed food product comprising stuffing a food emulsion into a tubular cellulosic casing having a coating over the internal surface thereof, which has been prepared according to one of the claims 11 to 15 and processing the food product.

# EP 0 180 207 B1

## Patentansprüche

1. Eine Beschichtungszusammensetzung, die zur Behandlung der inneren Oberfläche von Nahrungsmittelhüllen aus Cellulose nützlich ist, diese Beschichtungszusammensetzung umfaßt ein Gemisch aus einem ersten Bestandteil, der einen anionischen wasserlöslichen Celluloseether und einen zweiten Bestandteil, der einen nichtionischen, wasserlöslichen Celluloseether umfaßt, und als dritten Bestandteil ein Schmiermittel.

2. Beschichtungszusammensetzung nach Anspruch 1, worin das Schmiermittel aus der Gruppe, die aus Mineralöl, pflanzlichem Öl, tierischem Öl, Siliconöl, acetylierten Monoglyceriden, Polyoxyethylenmonoestern, Sorbitantrioleat, und deren Gemischen besteht, ausgewählt ist.

3. Die Beschichtungszusammensetzung nach den Ansprüchen 1 oder 2, worin dieser anionische Celluloseether aus der Gruppe, die aus Carboxymethylcellulose und Carboxymethylhydroxyethylcellulose besteht, ausgewählt ist.

4. Die Beschichtungszusammensetzung nach Anspruch 1, 2 oder 3, worin der nichtionische Celluloseäther aus der Gruppe, die aus Methylcellulose, Hydroxypropylmethylcellulose, Hydroxybutylmethylcellulose, Hydroxypropylcellulose, Ethylmethylcellulose, Hydroxyethylcellulose und Ethylhydroxyethylcellulose besteht, ausgewählt ist.

5. Die Beschichtungszusammensetzung nach einem der vorangegangenen Ansprüche, die ein Polyol mit 3 bis 6 Kohlenstoffatomen und wenigstens zwei Hydroxylgruppen einschließt.

6. Die Beschichtungszusammensetzung nach Anspruch 5, worin das Polyol aus der Gruppe, die aus Propylenglykol, Triethylenglykol, Glycerol und Sorbitol besteht, ausgewählt ist.

7. Die Beschichtungszusammensetzung nach einem der Ansprüche 1 bis 6, worin die erwähnten Nahrungsmittelhüllen Nahrungsmittelhüllen aus Cellulose umfassen.

8. Die Beschichtungszusammensetzung des Anspruchs 7, worin die erwähnten Nahrungsmittelhüllen aus Cellulose nicht faserige Nahrungsmittelhüllen sind.

9. Eine Beschichtungszusammensetzung nach einem der Ansprüche 1 bis 8, die eine Lösung, die mindestens etwa 0,3 Gewichtsprozent des anionischen wasserlöslichen Celluloseethers und mindestens 0,2 Gewichtsprozent des nichtionischen wasserlöslichen Celluloseethers, bezogen auf das Gewicht der Beschichtungszusammensetzung enthält, umfaßt.

10. Eine Beschichtungszusammensetzung nach einem der Ansprüche 1 bis 9, die mindestens etwa 1 Gewichtsprozent eines Schmiermittels, bezogen auf das Gewicht der Beschichtungszusammensetzung, enthält.

11. Ein Verfahren zur Herstellung einer Nahrungsmittelhülle aus Cellulose, die leicht von den umhüllten und in ihr verarbeiteten Nahrungsmittelprodukten entfernbar ist, welches das Auftragen einer Beschichtungszusammensetzung nach einem der Ansprüche 1 bis 10 auf die innere Oberfläche der Nahrungsmittelhülle aus Cellulose umfaßt.

12. Verfahren zur Herstellung einer Nahrungsmittelhülle aus Cellulose nach Anspruch 11, worin der erste Bestandteil in einem Anteil von zwischen etwa 0,01 mg/in$^2$ (0,00155 mg/cm$^2$) und zirka 0,04 mg/in$^2$ (0,00620 mg/cm$^2$) der inneren Hüllenoberfläche vorhanden ist.

13. Verfahren zur Herstellung einer Nahrungsmittelhülle aus Cellulose nach Anspruch 11 oder 12, worin der zweite Bestandteil in einem Anteil von zwischen etwa 0,007 mg/in$^2$ (0,00108 mg/cm$^2$) und etwa 0,15 mg/in$^2$ (0,02325 mg/cm$^2$) der inneren Hüllenoberfläche vorhanden ist.

14. Verfahren zur Herstellung einer Nahrungsmittelhülle aus Cellulose nach Anspruch 11, 12 oder 13, worin der dritte Bestandteil in einem Anteil von zwischen etwa 0,035 mg/in$^2$ (0,00542 mg/cm$^2$) und etwa 0,28 mg/in$^2$ (0,04341 mg/cm$^2$) der erwähnten inneren Hüllenoberfläche vorhanden ist.

15. Verfahren zur Herstellung einer nicht faserigen Nahrungsmittelhülle aus Cellulose nach einem der Ansprüche 11 bis 14, das die Zugabe von zwischen etwa 12,0 Gewichtsprozent und etwa 40,0 Gewichtsprozent Wasser, bezogen auf das Gewicht der trockenen Cellulose der Hülle, zur Hülle einschließt.

16. Verfahren zur Herstellung eines verarbeiteten Nahrungsmittelprodukts, umfassend das Stopfen einer Nahrungsmittelemulsion in eine röhrenförmige Cellulosehülle mit einer Beschichtung ihrer inneren Oberfläche, die nach einem der Ansprüche 11 bis 15 hergestellt worden ist, und die Verarbeitung des Nahrungsmittelprodukts.

## Revendications

1. Composition de revêtement utile pour le traitement de la surface intérieure d'enveloppes cellulosiques à usage alimentaire, ladite composition de revêtement comprenant un mélange d'un premier constituant renfermant un éther de cellulose anionique hydrosoluble et un deuxième constituant renfermant un éther de cellulose non ionique hydrosoluble, et comprenant en outre comme troisième constituant un lubrifiant.

2. Composition de revêtement suivant la revendication 1, dans laquelle le lubrifiant est choisi dans le groupe comprenant une huile minérale, une huile végétale, une huile animale, une huile de silicone, des monoglycérides acétylés, des monoesters de polyoxyéthylène, du trioléate de sorbitanne et leurs mélanges.

3. Composition de revêtement suivant la revendication 1 ou 2, dans laquelle l'éther de cellulose

13

**EP 0 180 207 B1**

anionique est choisi dans le groupe comprenant la carboxyméthylcellulose et la carboxyméthylhydroxyéthylcellulose.

4. Composition de revêtement suivant la revendication 1, 2 ou 3, dans laquelle l'éther de cellulose non ionique est choisi dans le groupe comprenant la méthylcellulose, l'hydroxypropylméthylcellulose, l'hydroxybutylméthylcellulose, l'hydroxypropylcellulose, l'éthylméthylcellulose, l'hydroxyéthylcellulose et l'éthylhydroxyéthylcellulose.

5. Composition de revêtement suivant l'une des revendications précédentes, renfermant un polyol ayant 3 à 6 atomes de carbone et au moins 2 groupes hydroxyle.

6. Composition de revêtement suivant la revendication 5, dans laquelle le polyol est choisi dans le groupe comprenant le propylèneglycol, le triéthylèneglycol, le glycérol et le sorbitol.

7. Composition de revêtement suivant l'une des revendications 1 à 6, dans laquelle les enveloppes à usage alimentaire consistent en enveloppes cellulosiques à usage alimentaire.

8. Composition de revêtement suivant la revendication 7, dans laquelle les enveloppes cellulosiques à usage alimentaire sont des enveloppes non fibreuses à usage alimentaire.

9. Composition de revêtement suivant l'une des revendications 1 à 8, comprenant une solution contenant au moins environ 0,3 pour cent en poids de l'éther de cellulose anionique hydrosoluble et au moins environ 0,2 pour cent en poids de l'éther de cellulose non ionique hydrosoluble, sur la base du poids de ladite composition de revêtement.

10. Composition de revêtement suivant l'une des revendications 1 à 9, renfermant au moins environ 1 pour cent en poids d'un lubrifiant, sur la base du poids de ladite composition de revêtement.

11. Procédé de préparation d'une enveloppe cellulosique à usage alimentaire qui peut être aisément décollée de produits alimentaires enveloppés et traités dans cette enveloppe, qui consiste à appliquer à la surface intérieure de ladite enveloppe cellulosique à usage alimentaire une composition de revêtement suivant l'une des revendications 1 à 10.

12. Procédé de préparation d'une enveloppe cellulosique à usage alimentaire suivant la revendication 11, dans lequel le premier constituant est présent en une quantité d'environ 0,01 mg/in$^2$ (0,00155 mg/cm$^2$) à environ 0,04 mg/in$^2$ (0,00620 mg/cm$^2$) de la surface intérieure de ladite enveloppe.

13. Procédé de préparation d'une enveloppe cellulosique à usage alimentaire suivant la revendication 11 ou 12, dans lequel le deuxième constituant est présent en une quantité d'environ 0,007 mg/in$^2$ (0,00108 mg/cm$^2$) à environ 0,15 mg/in$^2$ (0,02325 mg/cm$^2$) de la surface intérieure de ladite enveloppe.

14. Procédé de préparation d'une enveloppe cellulosique à usage alimentaire suivant la revendication 11, 12 ou 13, dans lequel le troisième constituant est présent en une quantité d'environ 0,035 mg/in$^2$ (0,00542 mg/cm$^2$) à environ 0,28 mg/in$^2$ (0,04341 mg/cm$^2$) de la surface intérieure de ladite eneveloppe.

15. Procédé de préparation d'une enveloppe cellulosique non fibreuse à usage alimentaire suivant l'une des revendications 11 à 14, consistant en outre à ajouter à ladite enveloppe environ 12,0 pour cent en poids à environ 40,0 pour cent en poids d'eau, sur la base du poids de la cellulose sèche présente dans ladite enveloppe.

16. Procédé de préparation d'un produit alimentaire cuisiné industriellement, consistant à remplir avec une émulsion alimentaire une enveloppe cellulosique tubulaire portant un revêtement sur sa surface intérieure, qui a été préparée suivant l'une des revendications 11 à 15, et à cuisiner industriellement le produit alimentaire.